# FASCICULE DE BREVET EUROPEEN

(11) **EP 0 480 817 B1**
(45) Date de publication et mention de la délivrance du brevet: **22.02.1995**
(21) Numéro de dépôt: 91402680.2
(22) Date de dépôt: 08.10.1991
(51) Int. Cl.: B62B 5/00, B60G 21/055

(54) **Chariot à plate-forme à stabilité renforcée**
Flurförderfahrzeug mit Fahrerstandplatz und erhöhter Stabilität
Industrial truck with platform and increased stability

(30) Priorité: 09.10.1990 FR 9012403
(43) Date de publication de la demande: 15.04.1992
(73) Titulaire: LOC MANUTENTION, 95310 St-Ouen-L'Aumone (FR)
(72) Inventeur: Dallongeville, Jacques, F-95310 Saint-Ouen-l'Aumone (FR)
(74) Mandataire: Lhuillier, René

(56) Documents cités:
- CH-A- 272 974
- FR-A- 2 606 765
- GB-A- 695 404
- US-A- 1 999 188

## Description

L'invention concerne un chariot à plate-forme et se rapporte plus précisément à un dispositif permettant de renforcer sa stabilité.

Les chariots dits "transpalette" motorisés, sont comme on sait, utilisés avec conducteur accompagnant, ou avec conducteur transporté et dans ce dernier cas ils disposent d'une plate-forme fixe ou rabattable fixée au châssis de l'appareil du côté opposé aux bras de fourche. Dans ces chariots, les extrémités des bras de fourches reposent sur des galets porteurs tandis que le châssis du chariot est habituellement monté sur trois points d'appui constitués d'une roue centrale motrice et directrice encadrée de roulettes stabilisatrices montées sur des ressorts ou tampons élastiques. Mais cette disposition particulière ne donne cependant pas toujours satisfaction, car sur des plans inclinés ou en virage, l'écrasement d'une roulette fait pencher le chariot, au risque du renversement de la charge. On préfère à cela une solution qui consiste à associer à la roue motrice un système de compression hydraulique, par exemple à vérins, qui augmente l'appui de cette roue sur le sol proportionnellement à l'augmentation de la charge.Dans ce cas, seule, la roue motrice peut se déplacer verticalement. Mais le montage des vérins rend cette solution coûteuse et nécessite des réglages délicats. Quel que soit le système adopté, quand on ajoute une plate-forme en porte à faux au châssis d'un transpalette, le problème de la stabilité du chariot se pose avec encore plus d'acuité. Aucune des solutions existantes n'apparaissant tout à fait satisfaisante, la Demanderesse a mis au point, pour ces chariots à plate-forme, un système stabilisateur approprié, dont le déplacement avec un conducteur transporté s'effectue dans de bonnes conditions d'adhérence et de stabilité, même sur des sols en dévers ou irréguliers.

Ainsi l'objet principal de la présente invention consiste en un chariot à plate-forme du type transpalette, à stabilité renforcée dont le châssis supporte du côté opposé aux fourches une plate-forme escamotable pour recevoir un conducteur transporté, ledit châssis reposant sur une roue centrale motrice et directrice, encadrée de roulettes stabilisatrices latérales, caracterisé en ce qu'un ressort unique de stabilisation prenant appui sur le châssis du chariot agit sur une biellette de renvoi reliée à deux leviers par l'intermédiaire d'une barre de synchronisation, lesdits leviers transmettant auxdites roulettes une force d'application dirigée vers le bas.

Selon une caractéristique particulière de l'invention, le ressort applique un effort de traction vers le bas sur la biellette de renvoi, par l'intermédiaire d'une vis et d'un écrou, une vis réglable formant butée au débattement de la biellette de renvoi.

Avantageusement, la barre de synchronisation est montée horizontalement sur le châssis et transversalement au compartiment central par l'intermédiaire de paliers, les leviers et la biellette de renvoi qui font corps avec la barre de synchronisation, se développant sensiblement dans un même plan horizontal, en direction de l'arrière du chariot.

D'autres caractéristiques particulières et avantages sur l'invention seront mieux perçus à la lecture de la description qui va suivre d'un exemple de réalisation faisant référence aux dessins annexés qui représentent :
Figure 1 une vue écorchée en perspective d'un chariot à plate-forme selon l'invention.
Figure 2 une vue schématique en coupe partielle montrant le montage du ressort.

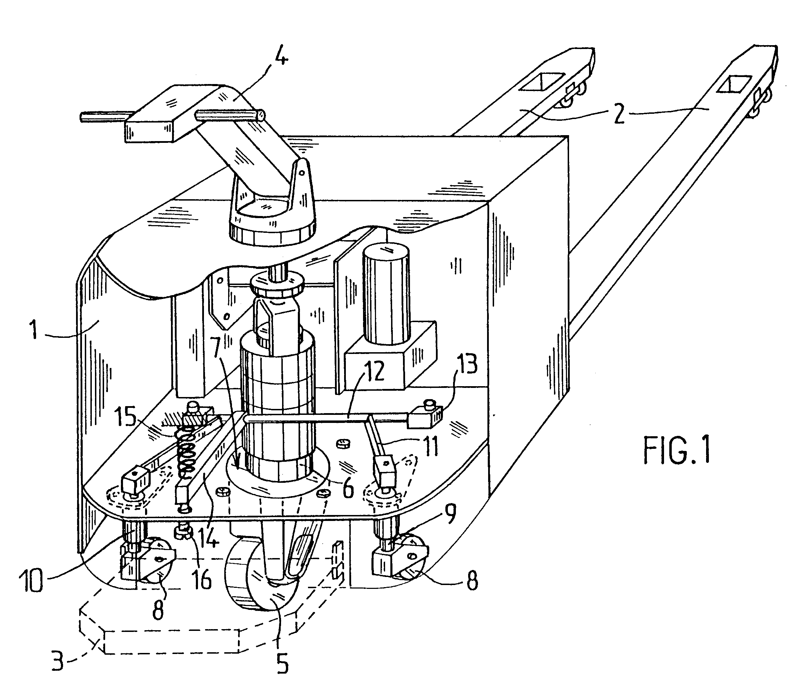

La transpalette représenté à la figure 1 est essentiellement constituée d'un compartiment central 1 formant le châssis du chariot, de deux fourches 2 à l'avant, levables le long dudit châssis, d'une plate-forme arrière 3 escamotable fixée au châssis de l'autre côté, pour recevoir le conducteur transporté et un timon 4 de manoeuvre du chariot, portant les divers organes de commande et surmontant le compartiment central. Le châssis repose essentiellement sur une roue centrale 5 motrice et directrice dont l'axe, sur lequel est monté un motoréducteur d'entraînement vertical 6 pivote dans deux paliers 7 solidaires du châssis.

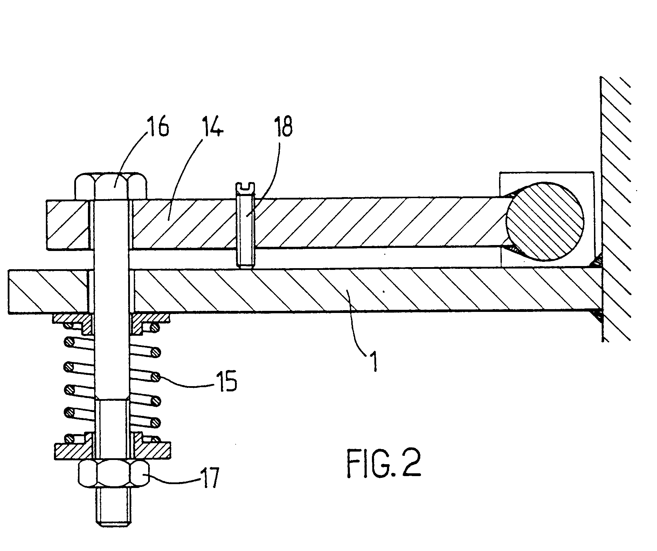

Le système stabilisateur du chariot est indépendant de la roue centrale. Il est constitué principalement de deux roulettes pivotantes 8 disposées de chaque côté de la roue centrale dont les tiges de support 9 coulissent et pivotent chacune dans un palier vertical 10 solidaire du châssis. Les roulettes pivotantes sont soutenues par un moyen quelconque à leur tige support 9 pour éviter leur chute en cas de délestage de l'appareil. Chaque tige 9 s'articule par son extrémité sur un levier 11 faisant corps avec une unique barre de synchronisation ou palonnier 12 montée horizontalement sur le châssis et transversalement au compartiment central 1 par l'intermédiaire de paliers 13. La barre de synchronisation est elle-même solidaire d'une biellette de renvoi 14, sensiblement horizontale et parallèle aux leviers 11, biellette qui est soumise à un effort de traction orienté vers le bas et appliqué par un ressort 15 prenant lui-même appui sur le châssis 1. On voit plus précisément à la figure 2 que le ressort 15 qui prend appui sur le châssis 1 du chariot exerce son effort, par l'intermédiaire d'une vis 16 de réglage et d'un écrou 17, sur la biellette 14. Cet effort est plus ou moins important selon que le ressort est plus ou moins comprimé par l'écrou 17. Une vis 18 limite et règle la course vers le bas de la biellette 14. On notera que les deux leviers 11 et la biellette de renvoi 14 faisant corps avec le palonnier 12 se développent sensiblement dans un même plan horizontal en direction de l'arrière du chariot.

Le ressort 15 qui exerce une force de traction continuelle sur l'extrémité de la biellette de renvoi 14 tend à imprimer à la barre de synchronisation 12 un mouvement de torsion autour de ses paliers 13 allant dans le sens du pivotement vers le bas des deux leviers 11. Les roulettes 8 se trouvent donc maintenues au ras du sol par l'intermédiaire des tiges 9. La position des roulettes 8 par rapport au sol, directement liée à la biellette 14 par l'intermédiaire de la barre de synchronisation est aussi réglable. On constate que c'est donc un ressort unique 15 de stabilisation qui agit simultanément sur chacune des roulettes stabilisatrices 8 par l'intermédiaire de la biellette de renvoi 14, de la barre de synchronisation 12 et des leviers 11. Le débattement possible des roulettes vers le bas est évidement lié au débattement de la biellette 14 selon la position de la vis réglable 18. En fonctionnement sur sol plat, la force du ressort 15 se répartit par moitié sur chacune des roulettes 8. Quand il y a un dévers du chariot ou passage d'une roulette dans un trou, du fait de la synchronisation totale du mouvement des roulettes par la barre 12, la biellette de renvoi 14 raménera toujours les roulettes dans la même position jusqu'à la compression à spires jointives du ressort 15. Une des deux roulettes se trouvera donc plus au moins écartée du sol et la force totale du ressort 15 s'appliquera alors sur l'autre roulette, ce qui donne une bien meilleure stabilité au chariot. En outre ce système permet d'empêcher l'appareil de se balancer latéralement par le fait qu'il ramène toujours les roulettes stabilisatrices 8 pratiquement dans le plan de la roue motrice 5, et avec un effort qui peut être assez important et réglable par la compression du ressort. En effet, en cas de basculement latéral du chariot, la force de rappel du ressort 15 tend à s'exercer uniquement sur la roulette se trouvant du côté du basculement ; la force de rappel exercée par la roulette est donc le double de celle qui serait exercée si chacune des roulettes était équipée d'un ressort indépendant, au lieu du ressort unique de l'invention. La stabilité du chariot en est donc grandement améliorée. On peut jouer sur le réglage de la vis 16 pour délester les roulettes stabilisatrices et maintenir une charge plus importante sur la roue motrice. On règle donc aisément, en fonction des conditions d'utilisation et des charges portées, les efforts transmis aux roulettes pour obtenir la meilleure stabilité et la meilleure adhérence de la roue motrice.

## Revendications

1. Chariot à plate-forme du type transpalette, à stabilité renforcée, dont le châssis (1) supporte du côté opposé aux fourches (2) une plate-forme escamotable (3) pour recevoir un conducteur transporté, ledit châssis reposant sur une roue centrale (5) motrice et directrice, encadrée de roulettes stabilisatrices latérales (8), caractérisé en ce qu'un ressort unique (15) de stabilisation prenant appui sur le châssis (1) du chariot agit sur une biellette de renvoi (14) reliée à deux leviers (11) par l'intermédiaire d'une barre de synchronisation (12), lesdits leviers transmettant auxdites roulettes une force d'application dirigée vers le bas.

2. Chariot à plate-forme selon la revendication 1, caractérisé en ce que le ressort (15) applique un effort de traction vers le bas sur la biellette de renvoi (14), par l'intermédiaire d'une vis (16) et d'un écrou (17).

3. Chariot à plate-forme selon les revendications 1 et 2, caractérisé en ce qu'une vis réglable (18) forme butée au débattement de la biellette de renvoi (14).

4. Chariot à plate-forme selon la revendication 1, caractérisé en ce que la barre de synchronisation (12) est montée horizontalement sur le châssis et transversalement au compartiment central (1) par l'intermédiaire de paliers (13).

5. chariot à plate-forme selon les revendications 1 et 4, caractérisé en ce que les leviers (11) et la biellette de renvoi (14) faisant corps avec la barre de synchronisation (12) se développent sensiblement dans un même plan horizontal en direction de l'arrière du chariot.

## Claims

1. A truck with a platform of the pallet truck type, with enhanced stability, the chassis (1) of which supports, on the opposite side of the forks (2), a retractable platform (3) for receiving a transported driver, the said chassis resting on a central driving and guiding wheel (5) flanked with lateral stabilising castors (8), characterised in that a single stabilising spring (15) bearing on the chassis (1) of the truck acts on a transmission link (14) connected to two levers (11) by means of a synchronisation bar (12), the said levers transmitting a downwardly-directed application force to the said castors.

2. A truck with a platform according to claim 1, characterised in that the spring (15) applies a downwardly-directed tensile load to the transmission link (14), by means of a screw (16) and of a nut (17).

3. A truck with a platform according to claims 1 and 2, characterized in that an adjustable screw (18) forms a limit stop for the travel of the transmission link (14).

4. A truck with a platform according to claim 1, characterized in that the synchronisation bar (12) is mounted horizontally on the chassis and transversely to the central compartment (1) by means of bearings (13).

5. A truck with a platform according to claims 1 and 4, characterised in that the levers (11) and the transmission link (14) which is integral with the synchronisation bar (12) extend substantially in a same horizontal plane towards the rear of the truck.

## Patentansprüche

1. Flurförderfahrzeug in Form eines Gabelhubwagens für Paletten mit Fahrerstandplatz und erhöhter Stabilität, dessen Fahrgestell (1) auf der den Hubgabeln (2) gegenüberliegenden Seite eine einklappbare Plattform (3) trägt, um einen mitbeförderten Fahrer aufzunehmen, wobei der Rahmen auf einem motor-betriebenen und lenkbaren Mittelrad (5) ruht, welches von seitlichen Stabilisierungsrollen (8) eingerahmt ist,
dadurch gekennzeichnet,
daß eine einzige Stabilisierungsfeder (15), die sich am Rahmen (1) des Flurförderfahrzeuges abstützt, auf einen Getriebeschwingarm (14) einwirkt, der mittels einer Synchronisationsstange (12) mit zwei Hebeln (11) verbunden ist, wobei die Hebel auf die Rollen eine nach unten gerichtete Druckkraft übertragen.

2. Flurförderfahrzeug nach Anspruch 1,
dadurch gekennzeichnet,
daß die Feder (15) mittels einer Schraube (16) und einer Mutter (17) eine Zugkraft nach unten auf den Getriebeschwingarm (14) ausübt.

3. Flurförderfahrzeug nach Anspruch 1 und 2,
dadurch gekennzeichnet,
daß eine einstellbare Schraube (18) einen Federungsanschlag für den Getriebeschwingarm (14) bildet.

4. Flurförderfahrzeug nach Anspruch 1,
dadurch gekennzeichnet,
daß die Synchronisationsstange (12) horizontal am Rahmen und querverlaufend im zentralen Raum (1) mittels Lagern (13) montiert ist.

5. Flurförderfahrzeug nach Anspruch 1 und 4,
dadurch gekennzeichnet,
daß die Hebel (11) und der Getriebeschwingarm (14); die einstückig mit der Synchronisationsstange (12) ausgebildet sind, sich ungefähr in der gleichen horizontalen Ebene in Richtung der Rückseite des Flurförderfahrzeuges erstrecken.
